# EUROPÄISCHE PATENTSCHRIFT

(11) **EP 0 775 443 B1**
(45) Veröffentlichungstag und Bekanntmachung des Hinweises auf die Patenterteilung: **23.01.2002**
(21) Anmeldenummer: 96118014.8
(22) Anmeldetag: 09.11.1996
(51) Int. Cl.: A01N 65/00, A23B 7/154

(54) **Verwendung eines Extrakts aus Lupinen**
Use of a lupin extract
Utilisation d'un extrait de lupine

(30) Priorität: 27.11.1995 DE 19544181
(43) Veröffentlichungstag der Anmeldung: 28.05.1997
(73) Patentinhaber: Jaeggle, Wolfgang, 88212 Ravensburg (DE); Avignon, Gérard, 47310 Estillac (FR); Weissmann, Elmar A., Dr., 78224 Bohlingen (DE)
(72) Erfinder: Jaeggle, Wolfgang, 88212 Ravensburg (DE); Avignon, Gérard, 47310 Estillac (FR); Weissmann, Elmar A., Dr., 78224 Bohlingen (DE)
(74) Vertreter: Patentanwälte Eisele, Otten, Roth & Dobler

(56) Entgegenhaltungen:
- EP-A- 0 276 013
- G. KAHNT & L. A. HIJAZI: "Use of Lupinex to increase crop yield and improve harvest quality with lesser nitrogen fertilization." J. AGRONOMY & CROP SCIENCE, Bd. 166, 1991, Seiten 228-237, XP002046313
- M. STOBIECKI, D. CIESIOTKA, M. PERETIATKOWICZ & K. GULEWICZ: 'Phenolic compounds isolated from bitter lupine seeds and their inhibitory effects on germination and seedling growth of lettuce.' J. CHEM. ECOLOGY Bd. 19, Nr. 2, 1993, Seiten 325 - 338, XP002046314

## Beschreibung

Die Erfindung betrifft eine Anwendung eines Extrakts aus Lupinen nach dem Oberbegriff des Anspruchs 1.

Lupinenextrakte sind bislang bereits als sogenannter Repellent gegenüber Pflanzenschädlingen eingesetzt worden. Hierbei spielen insbesondere die in Extrakten von Bitterlupinen vorkommenden Alkaloide eine Rolle.

Die Wirkung als Repellent wurde beispielsweise in einem Abschlußbericht zur Wirkung von Bitterlupinenextrakten auf Aphiden und natürliche Gegenspieler in Ackerbohnen im Rahmen eines Forschungsvorhabens des Ministeriums für ländlichen Raum, Ernährung Landwirtschaft und Forsten, Baden-Württemberg, Orn.Nr. 23-89.23 von Prof. Dr. B. Ohnesorge und Dipl.-Ing.-agr. W. Schuster der Universität Hohenheim, beschrieben.

Weiterhin wurde im Rahmen des 6. Internationalen Erfahrungsaustauschs über Forschungsergebnisse zum ökologischen Obstbau, veranstaltet von der staatlichen Lehr- und Versuchsanstalt für Wein- und Obstbau Weinsberg, ein Bericht veröffentlicht, der unter anderem die Anwendungen von Lupinenextrakt bei Apfelbäumen zur Bekämpfung der mehligen Apfelblattlaus sowie der Regenfleckenkrankheit zum Inhalt hat.

Darüberhinaus ist die Verwendung von Lupinenextrakten als Wachstumsverbesserer bekannt. Eine derartige Wirkung ist beispielsweise einem Artikel von G. Kahnt und L.A. Hijazi, J. Agronomy und Crop Science 166, 228 bis 237 (1991) zu entnehmen. In zwei Artikeln von W. Cwojdzinski, Z. Michalski, K. Gulewicz wird ebenfalls die wachstumsfördernde Wirkung von Lupinenextrakten erwähnt. Darüberhinaus geht aus den genannten Druckschriften hervor, daß durch die Anwendung von Lupinenextrakten die biologische Wertigkeit von Proteinen in Getreidepflanzen positiv beeinflußt wird.

Gegenüber den beschriebenen Anwendungsmöglichkeiten von Lupinenextrakten liegt der vorliegenden Erfindung die Aufgabe zugrunde, eine neue vorteilhafte Anwendungsform für Lupinenextrakte vorzuschlagen.

Der Erfindung nutzt hierbei die überraschende Erkenntnis, daß die Behandlung von Obstpflanzen mit Lupinenextrakt nicht nur die bekannte Wirkung als Repellent und als Wachstumsregulator zeigt, sondern daß zusätzlich qualitative Veränderungen in den Früchten feststellbar sind. Derartige qualitative Veränderungen können durch eine Veränderung der Zusammensetzung der Inhaltsstoffe stattfinden und beispielsweise eine besonders gute Fermentierbarkeit des Fruchtsafts bewirken. Der Verbesserung der Fermentierbarkeit kann beispielsweise eine veränderte Säurezusammensetzung zugrunde liegen.

Insbesondere bei der Behandlung von Rebstöcken hat sich eine Qualitätsveränderung des Traubensafts der von solchen behandelnden Rebstöcken geernteten Trauben gezeigt. Aus Trauben von Rebstöcken, die mit Lupinenextrakt behandelt wurden, läßt sich ein Wein mit deutlich verbesserter Qualität ausbauen. Die oben bereits erwähnte bessere Fermentierbarkeit sowie veränderte Säurezusammensetzung des Fruchtsaftes wurde in der Anwendung an Rebstöcken deutlich bestätigt.

In einer besonders vorteilhaften Ausführung der Erfindung wird als Lupinenextrakt ein wässriger Extrakt verwendet. Ein wässriger Extrakt ist insbesondere in der Verwendung im Lebensmittelbereich unbedenklich. Andere Lösungsmittel für den Extrakt wären jedoch ebenfalls denkbar, in Frage käme beispielsweise auch ein Extrakt auf Alkoholbasis.

Gute Ergebnisse wurden hierbei dadurch erzielt, daß die Anwendung des Lupinenextrakts durch aufsprühen auf die entsprechende Obstpflanzen durchgeführt wurde. Je nach Bedarf und je nach entsprechender Pflanze kann hierbei die Pflanze entweder ganz oder teilweise mit dem Lupinenextrakt eingesprüht werden.

Hierbei hat es sich in einer besonderen Anwendungsform der Erfindung bewährt, einen Extrakt mit einer Konzentration zwischen 0,6 % und 1,8% bezogen auf die Trockensubstanz zu verwenden. Ein solcher Extrakt kann beispielsweise durch eine 2 bis 6%ige Lösung von Konzentraten erzielt werden, die in etwa 30 % Trockensubstanz beinhalten. Derartige Konzentrate lassen sich in flüssiger Form herstellen. Insbesondere kann zur Erzielung der erfindungsgemäßen Wirkung auch ein ungereinigter Wasserextrakt ohne vorherige Reinigungsstufen, z.B. Filtrationen, Fällungen etc. verwendet werden. Ein ungereinigter Extrakt ist kostengünstiger erhältlich, da der entsprechende Reinigungsaufwand entfällt.

Insbesondere bei der Anwendung an Rebstöcken hat es sich als vorteilhaft erwiesen, die Pflanzen nach der Blüte zu besprühen. Empfehlenswert ist hierbei ein Zeitraum von bis zu 8 Wochen nach der Blüte der Pflanzen.

In einer besonderen Ausführungsform der Erfindung werden innerhalb dieses Zeitraums zwei oder mehrere Male Sprühmittel aus Lupinenextrakt versprüht.

Auch eine Besprühung während der Blütezeit wäre denkbar, wobei hier die Konzentration an Lupinenextrakten möglichst gering gehalten werden sollte. Die abwehrende Wirkung auf Insekten hätte sonst zur Folge, daß die Bestäubung der Blüten durch Insekten beeinträchtigt wird. Nach der Blüte kann sodann in einem oder mehreren wiederholten Sprühvorgängen die Konzentration erhöht werden.

Im Gegensatz hierzu wurde bei den bisher bekannten Anwendungen von alkaloidhaltigen Lupinenextrakten als Repellent die Behandlung der Pflanzen jeweils vor der Blüte bzw. unmittelbar vor der Ernte durchgeführt, da die Wirkung als Repellent hierbei sehr effektiv ist.

Um wenigstens teilweise die erfindungsgemäßen Vorteile mit der pflanzenschützenden Wirkung des Lupinenextrakts zu kombinieren, ist es von Vorteil, auch in der vorliegenden Anwendung alkaloidhaltige Extrakte, d.h. Bitterlupinenextrakte zur verwenden. Die schützende Wirkung für die Pflanzen kann durch eine weitere Behandlung der Pflanzen vor der Ernte, vorzugsweise in einem Zeitraum von 2 bis 5 Wochen verbessert werden. Die dabei aufgetragenen Alkaloide werden in der Regel innerhalb von 10 Tagen durch Lichteinstrahlung abgebaut. Eventuell vorhandene Reste von Alkaloiden werden auch im Gärungsprozeß durch die Hefe umgesetzt.

In der nachfolgenden Beschreibung werden konkrete Ausführungsbeispiele der Erfindung beschrieben. Diese Ausführungsbeispiele geben die Ergebnisse eines Feldversuchs wieder und veranschaulichen insbesondere die Wirkung von Lupinenextrakt auf die Säurezusammensetzung und somit auf die Fermentierbarkeit des Traubenmostes von den behandelten Rebstöcken.

### 1. Anwendung einer Sprühlösung mit ca. 0,6% Trockensubstanz auf die Rebsorte "Muscadelle".

Anzuwenden ist eine Lösung von 2 % Lupinenextrakt, der ca. 30% Trockensubstanz enthält. Die Sprühlösung enthält 1,5% Fixieröl, um den Lupinenextrakt auf den Pflanzen zu fixieren. Die angewandte Menge beträgt ca. 2 Liter Sprühlösung auf 10 Rebstöcke. Der Zeitpunkt der Anwendung liegt unmittelbar nach der Blüte.

Die Auswertung eines daraus resultierenden Traubenmostes im Vergleich zu einem unbehandelten Referenzmost ergab einen nur geringfügig veränderten Säuregehalt, wobei jedoch der Zuckergehalt stark erhöht war. Trotz des ungefähr gleichen Säuregehalts war die Fermentierbarkeit deutlich verbessert, was auf eine veränderte Säurezusammensetzung zurückzuführen ist. Der Traubenmost zeigte eine erhebliche Gärung bereits bei einer Lagerung bei 0°C. Aufgrund des erhöhten Zuckergehalts konnte bei gleicher Weinausbeute gegenüber den Referenzrebstöcken ein deutlich gesteigerter Alkoholgehalt erzielt werden.

### 2. Anwendung einer Sprühlösung mit ca. 1,8% Trockensubstanz.

In dieser Anwendung, bei der die Sprühlösung eine Konzentration von ca. 6% eines Lupinenextrakt mit 30% Trockensubstanz aufweist, wird ca. 2 Wochen nach der Blüte gesprüht.

Der hieraus resultierende Traubenmost zeigt einen erhöhten Säuregehalt bei einer Verringerung des Zuckergehalts gegenüber dem Referenzmost. Auch hier war die Fermentierbarkeit in gleicher Weise wie im vorgenannten Beispiel deutlich verstärkt. In diesem Ausführungsbeispiel war zudem die Weinausbeute deutlich verbessert. Aufgrund dieses erhöhten Ertrags konnte die gleiche absolute Menge an Alkohol bezogen auf 10 Rebstöcke wie im vorgenannten Ausführungsbeispiel erzielt werden.

### 3. Anwendung einer Sprühlösung mit 0,6% Trockensubstanz auf die Rebsorte "Semillon".

Vorab ist zu bemerken, daß die behandelten Beeren nicht so stark aneinander haften wie unbehandelte Beeren. Die verwendete Sprühlösung entspricht in der Konzentration sowie in der Menge ebenso wie im Sprühzeitpunkt unmittelbar nach der Blüte dem ersten Ausführungsbeispiel.

Bei dieser Rebsorte konnte bereits mit der geringen Konzentration an Lupinenextrakt eine deutliche Erhöhung des totalen Säuregehalts bei gleichzeitiger Erniedrigung des Zuckergehalts festgestellt werden. Die Beobachtungen bezüglich der Fermentierbarkeit entsprechen den beiden vorgenannten Ausführungsbeispielen.

Die Weinausbeute war stark verbessert, so daß auch die absolute Alkoholausbeute trotz verringerten Zuckergehalts stark erhöht war (+ 37%).

### 4. Anwendung einer Sprühlösung mit ca. 1,8% Trockensubstanz auf die Rebsorte "Semillon".

Zeitpunkt, Konzentration und Menge der Anwendung entsprechen dem oben angeführten zweiten Ausführungsbeispiel. Bei dieser Rebsorte war der Säuregehalt insgesamt durch die Behandlung mit der höheren Konzentration nur geringfügig gegenüber dem Referenzmost erhöht. Auch der Abfall im Zuckergehalt war gegenüber dem dritten Ausführungsbeispiel nicht so stark. Dennoch bestätigten sich auch hier die Beobachtungen bezüglich der Fermentierbarkeit in gleicher Weise wie in den vorgenannten Ausführungsbeispielen.

Aufgrund der leichten Steigerung der Weinausbeute gegenüber den unbehandelten Rebstöcken konnte trotz des leicht verminderten Zuckergehaltes immer noch eine Steigerung der Alkoholmenge von 6,8% in Bezug zu den unbehandelten Trauben festgestellt werden.

Die vorgenannten Ausführungsbeispiele zeigen grundsätzlich die Möglichkeit, wie durch Anwendung eines Lupinenextrakts auf Obstpflanzen die Früchte und insbesondere die Fruchtsäfte in der Zusammensetzung ihrer Inhaltsstoffe, insbesondere der Säurezusammensetzung, beeinflußt werden können. Weitere Ausführungsbeispiele mit veränderten Konzentrationen an Sprühmitteln, unterschiedlichen Sprühzeitpunkten sowie unterschiedlicher Anzahl von Anwendungen sind ohne weiteres möglich.

## Patentansprüche

1. Anwendung von Lupinenextrakt zur Behandlung von Pflanzen, **dadurch gekennzeichnet, daß** Obstpflanzen zur Veränderung der Zusammensetzung der Inhaltsstoffe der an den Obstpflanzen wachsenden Früchte mit dem Lupinenextrakt behandelt werden.

2. Anwendung von Lupinenextrakt, **dadurch gekennzeichnet, daß** Rebstöcke zur Verbesserung der Qualität des Traubensaftes der an den Rebstöcken wachsenden Trauben, und insbesondere zur Qualitätsverbesserung eines daraus ausgebauten Weines behandelt werden.

3. Anwendung von Lupinenextrakt nach einem der vorhergehenden Ansprüche, **dadurch gekennzeichnet, daß** ein wässriger Lupinenextrakt verwendet wird.

4. Anwendung von Lupinenextrakt nach einem der vorhergehenden Ansprüche, **dadurch gekennzeichnet, daß** die Pflanzen zwei- oder mehrfach behandelt werden.

5. Anwendung von Lupinenextrakt nach Anspruch 4, **dadurch gekennzeichnet, daß** unterschiedliche Konzentrationen des Sprühmittels für verschiedene Behandlungen verwendet werden.

6. Anwendung von Lupinenextrakt nach einem der vorhergehenden Ansprüche, **dadurch gekennzeichnet, daß** die Pflanzen wenigstens teilweise mit dem Extrakt besprüht werden.

7. Anwendung von Lupinenextrakt nach einem der vorhergehenden Ansprüche, **dadurch gekennzeichnet, daß** die Pflanzen nach der Blüte besprüht werden.

8. Anwendung von Lupinenextrakt nach einem der vorhergehenden Ansprüche, **dadurch gekennzeichnet, daß** die Pflanzen innerhalb von acht Wochen nach der Blüte besprüht werden.

9. Anwendung von Lupinenextrakt nach einem der vorhergehenden Ansprüche, **dadurch gekennzeichnet, daß** die Sprühlösung mit Lupinenextrakt eine Konzentration zwischen 0,6% und 1,8% bezogen auf die Trockensubstanz aufweist.

10. Anwendung von Lupinenextrakt nach einem der vorgenannten Ansprüche, **dadurch gekennzeichnet, daß** der Lupinenextrakt alkaloidhaltig ist.

11. Anwendung von Lupinenextrakt nach einem der vorhergehenden Ansprüche, **dadurch gekennzeichnet, daß** die Pflanzen zusätzlich vor der Ernte besprüht werden.

12. Anwendung von Lupinenextrakt nach einem der vorgenannten Ansprüche, **dadurch gekennzeichnet, daß** die Pflanzen 2 bis 5 Wochen vor der Ernte besprüht werden.

## Claims

1. Use of lupin extract to treat plants, **characterised in that** fruit plants are treated with the lupin extract to alter the composition of the contents of the fruit growing on the fruit plants.

2. Use of lupin extract, **characterised in that** vines are treated to improve the quality of the grape juice of the grapes growing on the vines, and, in particular, to improve the quality of a wine obtained therefrom.

3. Use of lupin extract according to any one of the preceding claims, **characterised in that** an aqueous lupin extract is used.

4. Use of lupin extract according to any one of the preceding claims, **characterised in that** the plants are treated twice or multiple times.

5. Use of lupin extract according to claim 4, **characterised in that** various concentrations of the spray are used for different treatments.

6. Use of lupin extract according to any one of the preceding claims, **characterised in that** the plants are sprayed at least partially with the extract.

7. Use of lupin extract according to any one of the preceding claims, **characterised in that** the plants are sprayed after flowering.

8. Use of lupin extract according to any one of the preceding claims, **characterised in that** the plants are sprayed within 8 weeks of flowering.

9. Use of lupin extract according to any one of the preceding claims, **characterised in that** the spray solution with lupin extract has a concentration between 0.6% and 1.8%, based on the dry substance.

10. Use of lupin extract according to any one of the preceding claims, **characterised in that** the lupin extract contains alkaloids.

11. Use of lupin extract according to any one of the preceding claims, **characterised in that** the plants are additionally sprayed prior to harvesting.

12. Use of lupin extract according to any one of the preceding claims, **characterised in that** the plants are sprayed 2 to 5 weeks prior to harvesting.

## Revendications

1. Utilisation d'un extrait de lupin pour traiter des plantes,
**caractérisée en ce que** des plantes à fruits sont traitées par l'extrait de lupin pour modifier la composition des matières constitutives des fruits croissant sur les plantes à fruits.

2. Utilisation d'un extrait de lupin,
**caractérisée en ce que** des ceps de vigne sont traités pour améliorer la qualité du jus des raisins croissant sur les ceps de vigne et, en particulier, pour améliorer la qualité d'un vin élaboré à partir de celui-ci.

3. Utilisation d'un extrait de lupin selon une des revendications précédentes,
**caractérisée en ce qu'**un extrait de lupin aqueux est utilisé.

4. Utilisation d'un extrait de lupin selon une des revendications précédentes,
**caractérisée en ce que** les plantes sont traitées deux fois ou plusieurs fois.

5. Utilisation d'un extrait de lupin selon la revendication 4,
**caractérisée en ce que** des concentrations différentes de l'agent de pulvérisation pour différents traitements sont utilisées.

6. Utilisation d'un extrait de lupin selon une des revendications précédentes,
**caractérisée en ce que** les plantes sont aspergées au moins partiellement avec l'extrait.

7. Utilisation d'un extrait de lupin selon une des revendications précédentes,
**caractérisée en ce que** les plantes sont aspergées après la floraison.

8. Utilisation d'un extrait de lupin selon une des revendications précédentes,
**caractérisée en ce que** les plantes sont aspergées sous huit semaines après la floraison.

9. Utilisation d'un extrait de lupin selon une des revendications précédentes,
**caractérisée en ce que** la solution d'aspersion avec l'extrait de lupin présente une concentration entre 0,6 % et 1,8 % relativement à la substance sèche.

10. Utilisation d'un extrait de lupin selon une des revendications précitées,
**caractérisée en ce que** l'extrait de lupin contient un alcaloïde.

11. Utilisation d'un extrait de lupin selon une des revendications précédentes,
**caractérisée en ce que** les plantes sont aspergées de façon supplémentaire avant la récolte.

12. Utilisation d'un extrait de lupin selon une des revendications précitées,
**caractérisée en ce que** les plantes sont aspergées de deux à cinq semaines avant la récolte.
